# EUROPÄISCHE PATENTANMELDUNG

(11) **EP 4 756 980 A1**
(43) Veröffentlichungstag der Anmeldung: **10.06.2026**
(21) Anmeldenummer: 24217897.8
(22) Anmeldetag: 05.12.2024
(51) Int. Cl.: H01M 10/42, H01M 10/04

(54) **TESTSTAND FÜR DIE BEWERTUNG VON EINEM IN EINER BATTERIE EINGESETZTEN MATERIAL SOWIE VERFAHREN UNTER VERWENDUNG EINES SOLCHEN TESTSTANDS**

(71) Anmelder: Henkel AG & Co. KGaA, 40589 Düsseldorf (DE)
(72) Erfinder: Kreiskoether, Kim Dana, 47495 Rheinberg (DE); Woo Lee, Keon, 40489 Düsseldorf (DE); Lammerschop, Olaf, 47802 Krefeld (DE)
(74) Vertreter: Henkel IP Department

(57) **Zusammenfassung**

Die Erfindung betrifft einen Teststand (1) für die Bewertung eines in einer Batterie einsetzbaren Materials unter Bedingungen, wie sie während eines thermischen Durchgehens auftreten können, wobei der Teststand (1) ein Gehäuse (10) umfasst, wobei in einem Innenraum (15) des Gehäuses (10) oder an dem Gehäuse (10) das zu bewertende Material angeordnet ist, wobei sich in dem Innenraum (15) des Gehäuses (10) eine Initiierungszelle (20a) mit einer Mantelfläche (23) sowie mehrere in der Nähe der Initiierungszelle (20a) angeordnete Nachbarzellen (20b bis 20g) befinden. Die Erfindung zeichnet sich dadurch aus, dass an der Mantelfläche (23) der Initiierungszelle (20a) ein Heizelement (30) angeordnet ist, welches sich in Umfangsrichtung der Initiierungszelle (20a) gesehen nur über einen ersten Teilbereich (24) der Mantelfläche (23) erstreckt, wobei der erste Teilbereich (24) einer ersten Nachbarzelle (20b, 20c) zugewandt ist, wobei ein zweiter Teilbereich (25) der Mantelfläche (23) frei von einem an der Mantelfläche (23) angeordneten Heizelement ist und einer zweiten Nachbarzelle (20c bis 20g) zugewandt ist, und wobei sich die erste Nachbarzelle (20b, 20c) in einem entladenen Zustand und die zweite Nachbarzelle (20c bis 20g) in einem aufgeladenen Zustand befinden. Des Weiteren betrifft die Erfindung ein Verfahren, in dem der Teststand verwendet wird.

## Beschreibung

Die Erfindung betrifft einen Teststand für die Bewertung eines in einer Batterie einsetzbaren Materials unter Bedingungen, wie sie während eines thermischen Durchgehens einer Batteriezelle auftreten können. Des Weiteren betrifft die Erfindung ein Verfahren, bei dem der Teststand verwendet wird.

In zahlreichen Anwendungen, insbesondere im Zusammenhang mit der Elektromobilität, werden heutzutage Hochvoltbatterien eingesetzt. Dazu werden einzelne Batteriezellen zu größeren Batterieanordnungen zusammengesetzt. Die einzelnen Batteriezellen, die oft mit kreisrunder oder rechteckiger Grundfläche ausgebildet sind, werden dicht an dicht nebeneinanderliegend in einem Batteriegehäuse angeordnet und in Serie und/oder parallel verschaltet.

Ein lokaler Kurzschluss zwischen den internen Elektroden einer Batteriezelle führt zu einem hohen Kurzschlussstrom, der die betreffende Batteriezelle in kurzer Zeit extrem aufheizt. Auch eine mechanische Beschädigung von außen oder eine thermische Überhitzung etwa durch Ausfall einer Batteriekühlung können zu einer extremen Aufheizung bzw. einem thermischen Durchgehen der Batteriezelle (thermal runaway) führen. Dieses thermische Durchgehen einer Batteriezelle kann leicht bzw. schnell auf benachbarte Batteriezellen übergreifen. Dies führt zu einer Kettenreaktion, wobei die in der Batterie gespeicherte Energie explosionsartig freigesetzt wird. Diese explosionsartige Energiefreisetzung, welche auch als thermische Propagation bezeichnet wird, kann mit giftigen Gasen und Flammen- und Funkenbildung einhergehen und bedeutet somit für Mensch und Umwelt eine hohe Gefahr.

Aus dem Stand der Technik ist bekannt, zwischen den einzelnen Batteriezellen ein Material mit geringer thermischer Leitfähigkeit, einer hohen elektrischen Durchschlagsfestigkeit und einer hohen thermische (Brand-)Beständigkeit vorzusehen, um die Gefahr einer thermischen Propagation zu reduzieren. Beispielsweise ist aus der EP 3 753 056 B1 bekannt, die einzelnen zylindrischen Batteriezellen in einer Vergussmasse einzubetten, die aus einem Polyurethanschaum mit einem hohen Anteil an Flammschutzmittel ist. Der Polyurethanschaum soll dabei möglichst eine Flammbeständigkeit der Stufe V0 aufweisen, gemessen nach dem UL 94 Test für die Entflammbarkeit von Kunststoffen.

Der in der Automobilindurstrie häufig durchgeführte UL 94 Test zur Bewertung von Brandschutzmaterialien wird mit offener Flamme durchgeführt. Die beim Test ermittelte Klassifikation (beispielsweise die Stufe V0) lässt bezüglich der Eignung eines Materials für den Einsatz in einer Batterie mit dem Ziel, eine thermische Propagation möglichst zu vermeiden, nur eine begrenzte Aussagekraft zu, da die Testbedingungen von den Bedingungen in einer Batterie deutlich abweichen. Daher werden Materialen wie Brandschutzbeschichtungen und Vergussmassen auch in Batterien getestet, in denen ein thermisches Durchgehen einer Batteriezelle initiiert wird. Dies geschieht jedoch in nicht standardisierten Aufbauten oder Methoden, da jeder Batteriehersteller für den Teststand sein eigenes Batteriedesign und Testaufbau verwendet. Die dadurch gewonnenen Testergebnisse eines initiierten thermischen Durchgehens sind daher untereinander nicht direkt vergleichbar.

Aus der EP 4 432 418 A1 ist ein Teststand für die Bewertung der Vergussmasse bekannt, in der die einzelnen Batteriezellen eingebettet sind. Der Teststand weist ein Gehäuse auf. In einem Innenraum des Gehäuses befinden sich eine Initiierungszelle sowie mehrere in der Nähe der Initiierungszelle angeordnete Nachbarzellen. Die Initiierungszelle lässt sich aktivieren, um ein thermisches Durchgehen dieser Zelle zu initiieren. Mit dem Teststand kann beispielsweise untersucht werden, inwieweit durch die eingesetzte Vergussmasse eine thermische Propagation verhindert werden kann.

Eine als Batteriezelle ausgeführte Initiierungszelle lässt sich dabei auf unterschiedliche Wege initiieren bzw. aktivieren. Zum einen kann die Initiierungszelle überladen oder mit einem zu hohen Ladestrom beaufschlagt werden. Interne Sicherheitsmaßnahmen, die bei Batteriezellen für Hochvoltbatterien im Automobilbau vorgesehen sind und die die elektrische Aufladung bei Überladung/Überstrom automatisch beenden, versperren diesen Weg der Aktivierung bzw. müssten aufwändig umgangen werden.

Zum anderen kann die Initiierungszelle durch ein von außen angebrachtes Heizelement erhitzt werden, um ein thermisches Durchgehen zu initiieren. Jedoch besteht hier die Gefahr, dass durch das Heizelement auch ein oder mehrere angrenzende Nachbarzellen aktiviert werden, sodass ein thermisches Durchgehen mehrerer Zellen nicht ausgeschlossen werden kann. Dies ist für die Bewertung der thermischen Propagation problematisch, da unklar ist, ob die Beschädigung einer Nachbarzelle auf ein mehrzelliges Durchgehen oder nur auf die thermische Propagation zurückzuführen ist. Zudem hat sich herausgestellt, dass hier die Testergebnisse nur bedingt reproduzierbar sind.

Schließlich kann die Initiierungszelle auch durch eine mechanische Beschädigung beispielsweise durch einen Nagel aktiviert werden, der in die Initiierungszelle getrieben wird. Dafür muss die Initiierungszelle von außen gut zugänglich sein. Dies führt dazu, dass die Initiierungszelle im Gehäuse des Teststands in einer Rand- oder Außenposition und nicht in einer mittleren Position angeordnet wird. In einer Außenposition befindet sich die Initiierungszelle aber in direkter Nähe zu einer Gehäusewandung des Gehäuses des Teststands. Diese direkte Nähe der Gehäusewandung führt aufgrund der Wärmekapazität und Wärmeleitfähigkeit der Gehäusewandung zu nicht repräsentativen Testergebnissen, die sich auf die Gegebenheiten einer wirklichen Batterie nur schlecht übertragen lassen.

Der Erfindung liegt daher die Aufgabe zu Grunde, ein Teststand für ein in einer Batterie einsetzbares Material bereitzustellen, der eine gute Balance zwischen Aufwand (Kosten, Zeit, Testumgebung) und Nutzen (Reproduzierbarkeit, Übertragbarkeit auf Batterien) hinsichtlich der Materialbewertung bei einem thermischen Durchgehen (thermal runaway) gewährleistet.

Die der Erfindung zu Grunde liegende Aufgabe wird mit dem Gegenstand gemäß Anspruch 1 gelöst. Ausführungsbeispiele können den Unteransprüchen zu Anspruch 1 entnommen werden.

Erfindungsgemäß ist vorgesehen, dass an einer Mantelfläche der Initiierungszelle ein Heizelement angeordnet ist, welches sich in Umfangsrichtung der Initiierungszelle gesehen nur über einen ersten Teilbereich der Mantelfläche erstreckt. Der erste Teilbereich ist einer ersten Nachbarzelle zugewandt. Ein zweiter Teilbereich der Mantelfläche ist frei von einem an der Mantelfläche angeordneten Heizelement und einer zweiten Nachbarzelle zugewandt. Die erste Nachbarzelle befindet sich in einem (tiefen-) entladenen Zustand, während sich die zweite Nachbarzelle in einem aufgeladenen Zustand befindet.

Die erste Nachbarzelle, die dem Heizelement an der Initiierungszelle zugewandt ist und sich deswegen in der Nähe zum Heizelement befindet, wird beim Aktivieren der Initiierungszelle ebenfalls erhitzt. Da die erste Nachbarzelle jedoch (tiefen-) entladen oder kaum geladen ist, ist das Risiko gering, dass auch bei dieser ersten Nachbarzelle ein thermisches Durchgehen auftritt. Somit kann sichergestellt werden, dass nur eine Batteriezelle, nämlich die Initiierungszelle, als Startpunkt einer thermischen Propagation angesehen werden kann. Dadurch erhöht sich die Reproduzierbarkeit der Testergebnisse.

Die zweite Nachbarzelle, die sich nicht in der Nähe des Heizelements befindet, erfährt durch das Heizelement praktisch keine Erwärmung. Sollte bei der zweiten Nachbarzelle nach erfolgtem Testlauf auch ein Defekt festgestellt werden, so ist dies auf die Überhitzung allein durch die thermische Propagation zurückzuführen, die durch das anfängliche alleinige thermische Durchgehen der Initiierungszelle gestartet wurde.

Bedingt durch den geringen Ladezustand der ersten Nachbarzelle ist die Wahrscheinlichkeit klein, dass durch das thermische Durchgehen der Initiierungszelle und durch die thermische Propagation die erste Nachbarzelle ebenso thermisch durchgeht, dabei Energie im nennenswerten Umfang freigeben kann und zur thermischen Propagation beiträgt. Gegenüber einer Batterie mit Batteriezellen, die alle einen aufgeladenen Ladungszustand aufweisen, wird im Teststand daher die Wahrscheinlichkeit einer thermischen Propagation tendenziell geringer sein. Auf der anderen Seite kommt der erfindungsgemäße Teststand mit einer entladenen zweiten Nachbarzelle den Gegebenheiten in einer Batterie deutlich näher als ein Teststand, bei dem in Randlage die Initiierungszelle direkt an der Gehäusewandung angrenzt. Da die Gehäusewandung üblicherweise aus Metall ist, fließt viel Wärme über die Gehäusewandung ab, was auf die thermische Propagation einen erheblichen Einfluss hat.

Die zweite Nachbarzelle kann vollständig aufgeladen sein, wobei die dann gegebene Vollladung der maximalen Kapazität entspricht. Die erste Nachbarzelle kann vollständig entleert oder tiefenentleert sein, sodass keine Restladung vorhanden ist (Ladezustand entspricht 0% der maximalen Kapazität). In einem Ausführungsbeispiel sind die Initiierungszelle und alle Nachbarzellen - mit Ausnahme der ersten Nachbarzelle oder den ersten Nachbarzellen - zu mindestens 95 % oder vorzugsweise zu 100 % geladen.

Die Initiierungszelle kann einen kreisrunden Querschnitt aufweisen. Auch die Nachbarzellen können einen kreisrunden Querschnitt aufweisen. Beispielsweise kann ein Durchmesser des kreisrunden Querschnitts 15 bis 50 mm betragen. Eine Höhe von Initiierungszelle und/oder Nachbarzelle kann 60 bis 100 mm betragen. Vorzugsweise sind Form und Größe der Initiierungszelle und Form und Größe der Nachbarzellen identisch.

Die Initiierungszelle kann auch einen rechteckigen Querschnitt bzw. eine rechteckige Grundfläche aufweisen. Falls der Querschnitt der Initiierungszelle rechteckig ist, kann auch der Querschnitt der Nachbarzellen rechteckig sein. Der Querschnitt bzw. die Grundfläche der Initiierungszelle kann auch von einer beliebigen geschlossenen Kurve (zum Beispiel von einer ovalen Kurve) umschlossen sein.

In einem Ausführungsbeispiel erstreckt sich das Heizelement im Wesentlichen über eine gesamte Höhe der Initiierungszelle. Ist beispielsweise das Initiierungselement 70 mm hoch, so weist auch das Heizelement eine Höhe von 70 mm oder eine geringfügig kleinere Höhe auf (beispielsweise 63 bis 70 mm, also größer gleich 90 %). Wenn sich das Heizelement über die gesamte Höhe der Initiierungszelle erstreckt, kann vergleichsweise viel Wärme pro Zeiteinheit von außen in die Initiierungszelle eingespeist werden.

Die Initiierungszelle und die Nachbarzellen können in einem Wabenmuster angeordnet sein, in welchem die Initiierungszelle in einer Mitte angeordnet ist und sechs Nachbarzellen um die Initiierungszelle herum angeordnet sind. In diesem Ausführungsbeispiel weist somit der Teststand insgesamt sieben Zellen bzw. Batteriezellen auf. Die Nachbarzellen liegen dabei bevorzugt auf den Ecken eines gleichseitigen Sechsecks mit einer Seitenlänge, die einem Abstand A zwischen Initiierungszelle und Nachbarzelle entsprechen. Vorzugsweise weisen in diesem Ausführungsbeispiel Initiierungszelle und Nachbarzellen jeweils den oben bereits erwähnten kreisrunden Querschnitt auf.

In dem Ausführungsbeispiel mit dem Wabenmuster können vier Nachbarzellen einen geladenen Zustand aufweisen, während zwei Nachbarzellen nicht aufgeladen sind. Somit würde der Teststand zwei erste Nachbarzellen (nicht aufgeladen) und vier zweite Nachbarzellen (aufgeladen) aufweisen. Die nicht aufgeladenen zwei ersten Nachbarzellen sind dabei vorzugsweise direkt unmittelbar nebeneinander angeordnet, sodass sie mit der im Wabenmuster in der Mitte liegenden Initiierungszelle ein gleichseitiges Dreieck mit der Kantenlänge A bilden. Zwischen der Initiierungszelle und den beiden ersten Nachbarzellen ist das Heizelement angeordnet.

Der erste Teilbereich kann in Umfangsrichtung gesehen 20 bis 50 % eines Gesamtumfangs der Mantelfläche entsprechen. Handelt es sich beispielsweise um eine Initiierungszelle mit kreisrundem Querschnitt oder kreisrunder Grundfläche mit dem Durchmesser D, so würde der Gesamtumfang π x D betragen. Der erste Teilbereich würde dann in Umfangsrichtung gesehen eine Länge von 0,2 x π x D bis 0,5 x π x D aufweisen. Bei einer Initiierungszelle mit kreisrunder Grundfläche bietet sich auch an, die Erstreckung des ersten Teilbereichs in Umfangsrichtung gesehen in Winkelgrad anzugeben. Beispielsweise kann sich der erste Teilbereich in einem Winkelbereich von 60 bis 150°, vorzugsweise 80 bis 130° erstrecken.

Es ist auch möglich, dass die Zellen des erfindungsgemäßen Teststands in einer Reihe angeordnet sind. Die Initiierungszelle ist dabei zwischen genau zwei Nachbarzellen angeordnet ist, nämlich zwischen der ersten Nachbarzelle und der zweiten Nachbarzelle.

Das Heizelement kann ein flächiges Heizelement sein. Das Heizelement kann als Heizfolie oder Heizmatte ausgebildet sein. Vorzugsweise wandelt das Heizelement elektrische Energie in Wärmeenergie um. Das Heizelement kann eine elektrische Leistungsaufnahme von 40 bis 150 W aufweisen. Eine Gesamtfläche des Heizelements kann 10 bis 50 cm² betragen.

Das Gehäuse des Teststands kann aus Metall, beispielsweise aus Stahl oder Aluminium sein. In einem Ausführungsbeispiel umfasst das Gehäuse eine kreisrunde Bodenplatte. Von der kreisrunden Bodenplatte kann sich eine zylindrische Seitenwand bis zu einem oberen Rand erstrecken, an dem ein Gehäusedeckel befestigt werden kann. Ein Volumen des Innenraums des Gehäuses kann in einem Bereich von 200 cm³ bis 800 cm³ liegen.

Eine weitere Aufgabe der Erfindung, die Bereitstellung eines Verfahrens zur Bewertung eines in einer Batterie einsetzbaren Materials unter Bedingungen, wie sie während eines thermischen Durchgehens auftreten können, wird mit der Merkmalskombination gemäß Anspruch 9 gelöst. Bei diesem Verfahren wird der hier beschriebene erfindungsgemäße Teststand verwendet. Das erfindungsgemäße Verfahren sieht vor, dass zur Aktivierung der Initiierungszelle dem Heizelement elektrische Energie zugeführt wird.

Die Initiierungszelle kann vor oder während der Zuführung der elektrischen Energie vollständig aufgeladen werden. in einem Ausführungsbeispiel ist die Initiierungszelle bereits vollständig aufgeladen, wenn mit der Erhitzung durch das Heizelement begonnen wird.

Anhand eines in der Zeichnung dargestellten Ausführungsbeispiels wird die Erfindung näher erläutert. Es zeigen:
- Figur 1: schematisch einen Teststand im Querschnitt; und
- Figur 2: den Teststand der Figur 1 im Längsschnitt.

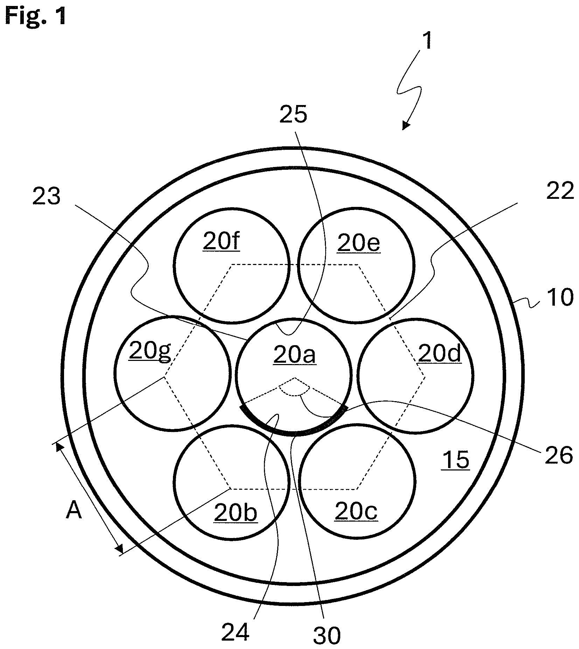

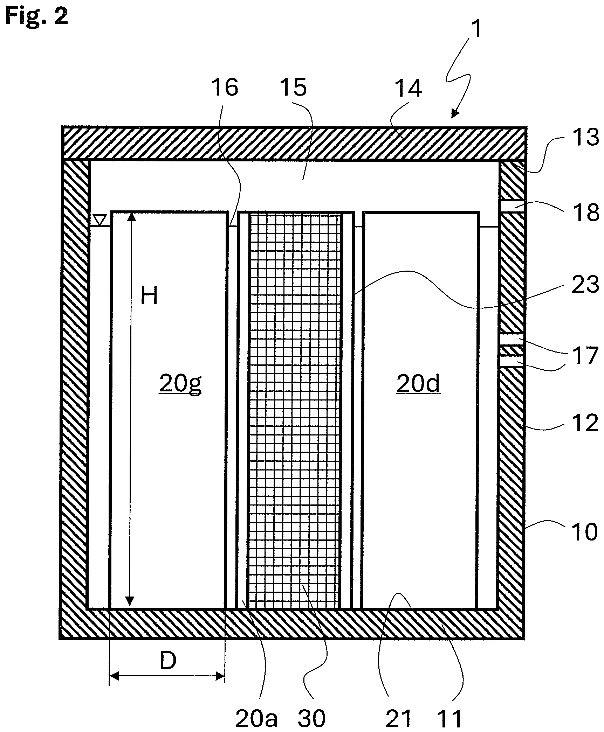

Die Figuren 1 und 2 zeigen einen Teststand, der in seiner Gesamtheit mit 1 bezeichnet wird. Der Teststand 1 umfasst ein Gehäuse 10 mit einer kreisrunden Bodenplatte 11 und einer umlaufenden zylindrischen Seitenwand 12. Auf einem oberen Rand 13 der Seitenwand 12 liegt ein abnehmbarer Gehäusedeckel 14 auf, der mit geeigneten Befestigungsmitteln (nicht dargestellt) an der Seitenwand 12 befestigt sein kann.

Das Gehäuse 10 umschließt einen Innenraum 15, in dem mehrere Batteriezellen bzw. Zellen 20 angeordnet sind. Die zylindrischen Zellen 20 weisen jeweils eine kreisrunde Grundfläche 21 mit einem Durchmesser D auf. Hinsichtlich Form, Größe und Aufbau sind alle Zellen 20 gleich. Eine Höhe der Zelle 20g ist mit H bezeichnet. Die Zellen 20 sind in einem Wabenmuster angeordnet. Eine in der Mitte des Wabenmusters liegende Initiierungszelle 20a wird von sechs Nachbarzellen 20b bis 20g umgeben.

Die sechs zylindrischen Nachbarzellen 20b bis 20g liegen mit ihren jeweiligen Mittelachsen auf den Eckpunkten eines virtuellen gleichmäßigen Sechsecks 22, wobei eine Länge einer Kante des Sechsecks 22 einem Abstand A zwischen zwei angrenzenden Nachbarzellen (beispielsweise 20f und 20g) bzw. dem Abstand A zwischen der Initiierungszelle 20a und einer jeden Nachbarzelle 20b bis 20g entspricht.

Die Gruppe der Nachbarzellen 20b bis 20g umfassen zwei erste Nachbarzellen 20b, 20c, die vollständig bzw. nahezu vollständig entleert sind. Deren Ladezustand beträgt somit exakt 0 % oder näherungsweise 0 % der maximalen Kapazität einer jeden Zelle 20. Die ersten Nachbarzellen 20b, 20c liegen direkt nebeneinander und bilden zusammen mit der Initiierungszelle 20a ein gleichseitiges Dreieck mit der Kantenlänge A.

Des Weiteren umfasst die Gruppe der Nachbarzellen 20b bis 20g vier zweite Nachbarzellen 20d bis 20g, die im Gegensatz zu den ersten Nachbarzellen 20b, 20c voll aufgeladen sind. Deren Ladezustand entspricht somit exakt 100 % oder näherungsweise 100 % der maximalen Kapazität.

Die Initiierungszelle 20a weist ebenfalls einen vollständig aufgeladenen Zustand auf. Alternativ ist es auch möglich, dass der Ladezustand der Initiierungszelle 20a nur in der Nähe von 100 % liegt, aber erst in einem Testablauf, der weiter unten noch detailliert beschrieben wird, auf 100 % aufgeladen wird.

An einer Mantelfläche 23 der Initiierungszelle 20a ist ein flächiges Heizelement 30 angeordnet, welche beispielsweise auf die Mantelfläche geklebt und in anderer geeigneter Weise auf der Mantelfläche fixiert ist. Die Mantelfläche erstreckt sich über die gesamte Höhe H der Initiierungszelle 20a.

Senkrecht zur Höhe H, also in Umfangsrichtung, erstreckt sich das Heizelement 30 nur in einem ersten Teilbereich 24 der Mantelfläche 23. Ein zweiter Teilbereich 25, der einem Gesamtumfang der Mantelfläche 23 abzüglich dem ersten Teilbereich 24 entspricht, ist kein (weiteres) Heizelement vorgesehen. Der zweite Teilbereich ist somit frei von einem Heizelement.

Im hier dargestellten Ausführungsbeispiel erstreckt sich das Heizelement 20 in Umfangrichtung über einen Winkelbereich, der in Figur 1 durch den Winkel 26 gekennzeichnet ist. Der Winkel 26 beträgt rund 120°. Das Heizelement 30 nimmt im ebenen oder abgewickelten Zustand die Form eines Rechtecks an, wobei die Länge einer Kante des Rechtecks der Höhe H und die Länge der anderen Kante der Erstreckung des Heizelements in Umfangsrichtung entsprechen.

Der erste Teilbereich 24 bzw. das Heizelement 30 ist den beiden ersten Nachbarzellen 20b, 20c zugewandt. Mit anderen Worten grenzen die ersten Nachbarzellen 20b, 20c direkt an dem Heizelement 30 an. Zwischen den zweiten Nachbarzellen 20d bis 20g und der Initiierungszelle 20a ist jeweils kein Heizelement vorgesehen.

In Figur 1 ist mit 16 eine obere Kante einer Vergussmasse bezeichnet, in der die Zellen 20 eingebettet sind. Die Vergussmasse kann ein geschäumtes Polyurethan sein. Oberhalb der Vergussmasse, also zwischen der oberen Kante 16 und dem Deckel 14, kann eine weitere Vergussmasse bzw. eine Deckschicht vorgesehen sein.

Figur 1 zeigt des Weiteren in der Seitenwand 12 mehrere Öffnungen 17, 18. Durch die Öffnungen 17 können Leitungen von außen in den Innenraum 15 geführt werden, um beispielsweise Signale von Thermoelementen im Innenraum 15 des Gehäuses 10 zu übertragen. Durch die Öffnungen 17 können auch Leitungen zur Stromversorgung des Heizelements 30 oder - soweit dies notwendig sein sollte - zum Aufladen der Initiierungszelle 20a geführt sein. Die Öffnungen 18 stehen exemplarisch für Belüftungsöffnungen im Gehäuse, die beispielsweise auch im Gehäusedeckel 14 vorgesehen sein können.

Im Folgenden wird nun kurz ein möglicher Testablauf und die dazugehörigen Testvorbereitungen näher beschrieben:
Zunächst wird das Heizelement 30 an die der sieben Zellen 20 angebracht, die als Initiierungszelle 20a vorgesehen ist. Das Heizelement 30 wird dabei mit Kabeln zur Stromversorgung versehen.

Zudem können die Initiierungszelle 20a und die anderen Zellen 20b bis 20g mit Thermoelementen versehen werden. Die Initiierungszelle 20a ist an Kabeln zur Zellenaufladung angeschlossen, um eine Aufladung bzw. Beladung der Initiierungszelle 20a während des Testablaufs zu ermöglichen.

Nach erfolgter Verkabelung werden die sieben Batteriezellen 20 im Verbund in das Gehäuse 10 gesetzt. Das Verbund kann dabei hier nicht dargestellte Zellenhalter aufweisen, durch die das oben beschriebene Wabenmuster vorgegeben wird. Zwei nicht geladene Nachbarzellen 20b, 20c werden dabei so positioniert, dass sie dem Heizelement 30 des in der Mitte positionierten Initiierungszelle 20a gegenüberstehen. Alle übrigen Nachbarzellen 20d bis 20g sind 100 % aufgeladen.

Dem Einsetzen des Verbunds in das Gehäuse folgt das Vergießen der Vergussmasse. Dadurch werden die einzelnen Zellen 20 im Gehäuse fixiert. Handelt es sich bei der Vergussmasse um ein aufschäumendes Material, muss die Vergussmasse beispielsweise nur bis zur halben Höhe der nun im Innenraum 15 des Gehäuses befindlichen Zellen 20 eingefüllt werden. Durch das Aufschäumen steigt die Vergussmasse bis zur oberen Kante 16 an. Der verbleibende Zwischenraum zwischen oberer Kante 16 und dem oberen Rand 13 der Seitenwand 12 kann durch eine weitere Vergussmasse ausgefüllt werden. Danach wird der Deckel 14 an der Seitenwand 12 befestigt, wobei zwischen Deckel 14 und dem oberen Rand der Seitenwand noch eine Abdichtmaterial vorgesehen sein kann.

Nachdem alle aus dem Gehäuse 10 geführten Kabel und Leitungen an Stromversorgung bzw. an die die Messsignale empfangenen Geräte angeschlossen worden sind, kann der eigentliche Test beginnen. Dazu wird eine elektrische Spannung an das Heizelement 30 angelegt, die beispielsweise 20 bis 60 Volt betragen kann. Dadurch wird das Initiierungselement 20a erhitzt, bis ein thermisches Durchgehen der Initiierungszelle ausgelöst wird. Fortlaufend werden dabei im Innenraum 15 an verschiedenen Stellen über die Thermoelemente die Temperaturen erfasst. Die Thermoelemente können dabei die Temperatur an verschiedenen Stellen am oder im Gehäuse 10 messen (beispielsweise im Vergussmaterial, auf der Innenseite des Deckels 14, oberhalb der Zellkontakte) Anhand der Auswertung der diversen Temperaturverläufe und anhand der Inspektion der einzelnen Zellen 20a bis 20g nach Beendigung des Tests lässt sich feststellen, ob und in welchem Umfang eine thermische Propagation stattgefunden hat. Die erzielten Versuchsergebnisse lassen dabei Rückschlüsse über die Eignung der eingesetzten Batteriesicherheitsmaterialien zu, eine thermische Propagation zu verhindern sowie die Gefahr in der Umgebung zu reduzieren.

### Bezugszeichenliste

- 1: Teststand

- 10: Gehäuse
- 11: Bodenplatte
- 12: Seitenwand
- 13: oberer Rand
- 14: Gehäusedeckel
- 15: Innenraum
- 16: obere Kante der Vergussmasse
- 17: Öffnung
- 18: Öffnung

- 20: Zelle / Batteriezelle
- 20a: Initiierungszelle
- 20b, 20c: erste Nachbarzelle
- 20d - 20g: zweite Nachbarzelle
- 21: Grundfläche
- 22: Sechseck
- 23: Mantelfläche
- 24: erster Teilbereich
- 25: zweiter Teilbereich
- 26: Winkel

- 30: Heizelement

## Patentansprüche

1. Teststand (1) für die Bewertung eines in einer Batterie einsetzbaren Materials unter Bedingungen, wie sie während eines thermischen Durchgehens auftreten können, wobei der Teststand (1) ein Gehäuse (10) umfasst, wobei in einem Innenraum (15) des Gehäuses (10) oder an dem Gehäuse (10) das zu bewertende Material angeordnet ist, wobei sich in dem Innenraum (15) des Gehäuses (10) eine Initiierungszelle (20a) mit einer Mantelfläche (23) sowie mehrere in der Nähe der Initiierungszelle (20a) angeordnete Nachbarzellen (20b bis 20g) befinden, **dadurch gekennzeichnet, dass** an der Mantelfläche (23) der Initiierungszelle (20a) ein Heizelement (30) angeordnet ist, welches sich in Umfangsrichtung der Initiierungszelle (20a) gesehen nur über einen ersten Teilbereich (24) der Mantelfläche (23) erstreckt, wobei der erste Teilbereich (24) einer ersten Nachbarzelle (20b, 20c) zugewandt ist, wobei ein zweiter Teilbereich (25) der Mantelfläche (23) frei von einem an der Mantelfläche (23) angeordneten Heizelement ist und einer zweiten Nachbarzelle (20c bis 20g) zugewandt ist, und wobei sich die erste Nachbarzelle (20b, 20c) in einem entladenen Zustand und die zweite Nachbarzelle (20c bis 20g) in einem aufgeladenen Zustand befinden.

2. Teststand (1) nach Anspruch 1, **dadurch gekennzeichnet, dass** die erste Nachbarzelle (20b, 20c) vollständig entleert und die zweite Nachbarzelle (20c bis 20g) vollständig aufgeladen sind.

3. Teststand (1) nach Anspruch 1 oder 2, **dadurch gekennzeichnet, dass** die Initiierungszelle (20a) einen kreisrunden Querschnitt oder einen rechteckigen Querschnitt aufweist.

4. Teststand (1) nach einem der Ansprüche 1 bis 3, **dadurch gekennzeichnet, dass** sich das Heizelement (30) im Wesentlichen über eine gesamte Höhe (H) der Initiierungszelle (20a) erstreckt.

5. Teststand (1) nach einem der Ansprüche 1 bis 4, **dadurch gekennzeichnet, dass** die Initiierungszelle (20a) und die Nachbarzellen (20b bis 20g) in einem Wabenmuster angeordnet sind, in welchem die Initiierungszelle (20a) in einer Mitte angeordnet ist und sechs Nachbarzellen (20b bis 20g) um die Initiierungszelle (20a) herum angeordnet sind, wobei die Nachbarzellen (20b bis 20g) auf den Ecken eines gleichseitigen Sechsecks (22) mit einer Seitenlänge liegen, die einem Abstand (A) zwischen Initiierungszelle (20a) und Nachbarzelle (20b bis 20g) entsprechen.

6. Teststand (1) nach einem der Ansprüche 1 bis 5, **dadurch gekennzeichnet, dass** der erste Teilbereich (24) in Umfangsrichtung gesehen 20 bis 50 % eines Gesamtumfangs der Mantelfläche (23) entspricht.

7. Teststand (1) nach einem der Ansprüche 1 bis 6, **dadurch gekennzeichnet, dass** das Heizelement () als Heizfolie oder Heizmatte ausgebildet ist.

8. Teststand (1) nach einem der Ansprüche 1 bis 7, **dadurch gekennzeichnet, dass** das Gehäuse (10) eine kreisrunde Bodenplatte (11) umfasst.

9. Verfahren zur Bewertung eines in einer Batterie einsetzbaren Materials unter Bedingungen, wie sie während eines thermischen Durchgehens auftreten können, wobei das Verfahren die Verwendung eines Teststands (1) nach einem der Ansprüche 1 bis 8 vorsieht, wobei zur Aktivierung der Initiierungszelle (20a) dem Heizelement (30) elektrische Energie zugeführt wird.

10. Verfahren nach Anspruch 9, **dadurch gekennzeichnet, dass** die Initiierungszelle (20a) vor oder während der Zuführung der elektrischen Energie vollständig aufgeladen wird.
